(19) Europäisches Patentamt
European Patent Office
Office européen des brevets

(11) Veröffentlichungsnummer: **0 333 141 B1**

(12) # EUROPÄISCHE PATENTSCHRIFT

(45) Veröffentlichungstag der Patentschrift: **01.06.94**

(51) Int. Cl.$^5$: **B01D 17/05**

(21) Anmeldenummer: **89104537.9**

(22) Anmeldetag: **14.03.89**

(54) **Verfahren zum Trennen von Erdölemulsionen vom Typ Wasser-in-Oel.**

(30) Priorität: **18.03.88 DE 3809067**

(43) Veröffentlichungstag der Anmeldung:
**20.09.89 Patentblatt 89/38**

(45) Bekanntmachung des Hinweises auf die Patenterteilung:
**01.06.94 Patentblatt 94/22**

(84) Benannte Vertragsstaaten:
**DE GB IT NL**

(56) Entgegenhaltungen:
**EP-A- 0 055 433**
**EP-A- 0 055 434**
**EP-A- 0 078 975**
**US-A- 3 383 325**
**US-A- 3 579 466**

(73) Patentinhaber: **HOECHST AKTIENGESELLSCHAFT**

**D-65926 Frankfurt(DE)**

(72) Erfinder: **Kupfer, Rainer, Dr.**
**Römerstrasse 2**
**D-8261 Kastl(DE)**
Erfinder: **Böse, Willibald, Dr.**
**Rossfeldstrasse 7**
**D-8269 Burgkirchen(DE)**
Erfinder: **Hille, Martin, Dr.**
**In den Eichen 46**
**D-6237 Liederbach(DE)**
Erfinder: **Böhm, Roland**
**Fischbacher Strasse 29**
**D-6233 Kelkheim (Taunus)(DE)**
Erfinder: **Staiss, Friedrich**
**Odenwaldstrasse 21**
**D-6200 Wiesbaden(DE)**

**EP 0 333 141 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Trennen von Erdölemulsionen vom Type Wasser-in-Öl durch Zusatz von Glycidylether-Verbindungen.

Aus den beiden US-A-4 419 265 und 4 420 413 ist es bekannt, Erdölemulsionen vom Typ Wasser-in-Öl dadurch zu trennen, daß Erdölspalter aus der Gruppe der Glycidylether-Verbindungen eingesetzt werden. Die Erdölspalter der US-A-4 419 265 werden durch Addition von 1 mol eines Ethylenoxyid/Propylenoxid-Blockpolymeren an 0,6 bis 1 mol eines Diglycidylethers von Bisphenolen hergestellt und jene der US-A-4 420 413 dadurch, daß an den genannten Additionsschritt noch eine Oxalkylierung mit Ethylenoxid, Propylenoxid und/oder Butylenoxid angeschlossen wird.

Es sind auch schon Glycidylether-Verbindungen bekannt, die Additionsprodukte aus Ethylenoxid/Propylenoxid-Blockpolymeren und Polyglycidylethern von Phenol/Formaldehyd-Kondensationsprodukten (Novolak-Harzen) darstellen, wobei das Verhältnis der Hydroxyläquivalente im Polyether-Blockpolymeren zu den Epoxidäquivalenten im Kondensationsprodukt 2 : 1 bis 5 : 1 beträgt. Solche Glycidylether-Verbindungen sind in der CA-A-1 153 356 als Verdickungsmittel für Hydraulikflüssigkeiten auf Glykol-Wasser-Basis beschrieben. Als weitere Anwendungen wird der Einsatz in Bremsflüssigkeiten und Schmiermitteln und als Ausgangsmaterial für Oberflächenmittel, Weichmacher und Harze genannt. Die Möglichkeit einer Verwendung als Emulsionsspalter, insbesondere als Spalter von Erdölemulsionen des Wasser-in-Öl-Typs wird nicht genannt und auch nicht angedeutet.

Bei der Förderung von Erdöl tritt bekanntlich eine zunehmende Verwässerung des Öls ein. Das mitgeförderte Wasser bildet mit dem Öl eine Wasser-in-Öl-Emulsion. In dem emulgierten Wasser können Salze wie Natriumchlorid, Calciumchlorid und Magnesiumchlorid gelöst sein. Dieses Emulsionswasser muß vor dem Transport abgetrennt werden. In den Raffinerien wird vor der Destillation der Salzgehalt durch eine erneute Emulsionsbildung mit Süßwasser und Demulgierung weiter abgesenkt. Ein zu hoher Salzgehalt im Rohöl kann zu Störungen und Korrosion in den Raffinerien führen. Ein Erdölspalter, auch Demulgator oder Emulsionsspalter genannt, hat die Aufgabe, bei möglichst geringer Anwendungskonzentration die Emulsion zu brechen und bei diesem Separationsprozeß möglichst ohne oder mit minimaler zusätzlicher Aufwendung von Wärme eine vollständige Wasserabscheidung zu bewirken und den Salzgehalt auf ein Minimum zu reduzieren. Die Qualitätskriterien für geliefertes Rohöl sind das Restsalz und der Wassergehalt.
Die Rohöle sind je nach ihrer Provenienz unterschiedlich zusammengesetzt. Die natürlichen Emulsionsstabilisatoren besitzen einen komplizierten, differenzierten chemischen Aufbau. Zur Überwindung ihrer Wirkung müssen selektiv Spalter entwickelt werden. Durch verschiedene Förder- und Aufbereitungsbedingungen werden die Anforderungen, die an einen Erdölspalter gestellt werden, noch vielfältiger. Durch das ständige Erschließen neuer Erdölfelder und die Änderung der Förderbedingungen älterer Erdölfelder bleibt die Entwicklung optimaler Demulgatoren ein akutes Problem, und es werden eine große Anzahl verschiedenartig aufgebauter Demulgatoren und Demulgatormischungen benötigt.

Es wurde gefunden, daß bestimmte Additionsprodukte aus Ethylenoxid/Propylenoxid-Blockpolymeren und Polyglycidylethern von Phenol/Formaldehyd-Kondensationsprodukten hochwirksame Eigenschaften hinsichtlich Wasser-in-Öl-Emulsionen aufweisen.

Das erfindungsgemäßen Verfahren zum Trennen von Erdölemulsionen vom Typ Wasser-in-Öl durch Zusatz von Glycidylether-Verbindungen ist demnach dadurch gekennzeichnet, daß den Erdölemulsionen Additionsprodukte aus 1 val eines Ethylenoxid/Propylenoxid-Blockpolymeren der nachstehenden Formel I

$$HO(CH_2CH_2O)_m-(CH_2\underset{\displaystyle CH_3}{\underset{|}{C}}HO)_p-(CH_2CH_2O)_nH$$

worin m und n Zahlen sind, die so gewählt sind, daß der Polyethylenoxidanteil 10 bis 80 % des Molekulargewichts des Gesamtmoleküls beträgt, und p eine Zahl von 10 bis 100 ist,
und 0,1 bis 1,5 val, vorzugsweise 0,3 bis 1 val, eines Polyglycidylethers der nachstehenden Formel II

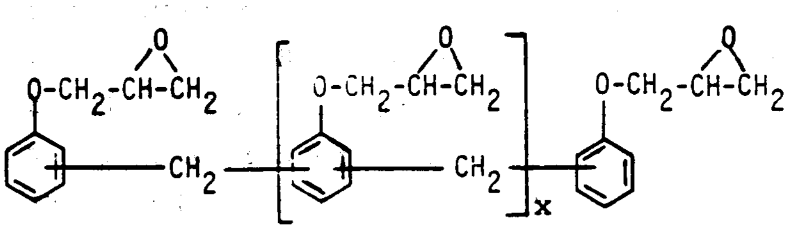

worin x eine Zahl von 1 bis 10 ist,
in einer wirksamen Mengen zugesetzt werden.

Bevorzugte Ethylenoxid/Propylenoxid-Blockpolymerisate der Formel I sind solche, wenn n und m Zahlen sind, die so gewählt sind, daß der Polyethylenoxidanteil 15 bis 70 % des Molekulargewichtes des Gesamtmoleküls beträgt, und p eine Zahl von 20 bis 70 ist. Bevorzugte Polyglycidylether der Formel II sind solche, wenn x eine Zahl von 2 bis 5 ist (die $-CH_2$-Brücken in der Formel II stehen bekanntlich im wesentlichen in ortho- und para-Position am Phenylkern). Polyether-Blockpolymere der Formel I und Glycidylether der Formel II sowie die Umsetzung dieser Verbindungen zu Additionsprodukten sind in den eingangs genannten Druckschriften beschrieben.

Im Rahmen der vorliegenden Erfindung werden die Polyether-Blockpolymeren der Formel I und die Polyglycidylether der Formel II zur Herstellung der in Rede stehenden Additionsprodukte derart eingesetzt, daß das Verhältnis der Hydroxyläquivalente im Polyether-Blockpolymeren zu den Epoxidäquivalenten im Polyglycidylether 1 zu 0,1 bis 1,5, vorzugsweise 1 zu 0,3 bis 1, beträgt. Wenn auch die Additionsreaktion als solche aus den eingangs genannten Druckschriften bekannt ist, sei hier dennoch eine bevorzugte Vorgangsweise zur Herstellung der erfindungsgemäß einzusetzenden Additionsprodukte angegeben. Die Additionsreaktion kann unter Verwendung eines inerten Lösungsmittels, wie Toluol oder Xylol, oder ohne Lösungsmittel in der Schmelze und unter Abdeckung mit einem Schutzgas durchgeführt werden, wobei die Durchführung in der Schmelze bevorzugt ist. Die Reaktionstemperatur liegt bei 70 bis 150 °C, vorzugsweise 80 bis 120 °C. Es kann zweckmäßig sein, die Gesamtmenge an Polyglycidylether in zwei bis drei Anteilen im Laufe der Reaktion zuzugeben. Die Addition erfolgt vorzugsweise in Gegenwart eines Katalysators, der alkalischer oder saurer Art sein kann. Bevorzugte alkalische Katalysatoren sind Alkalimetallhydroxide, -carbonate, -lactate und Alkalimetallalkoholate, wie Natriummethylat, Kaliummethylat und dergleichen. Bevorzugte saure Katalysatoren sind Lewissäuren, wie $BF_3$-etherate, Halogenwasserstoffsäuren, Schwefelsäure und Sulfonsäuren. Der Katalysator wird in einer Menge von 0,05 bis 3 Gew.-% eingesetzt, vorzugsweise in einer Menge von 0,1 bis 1 Gew.-%, Gewichtsprozente bezogen auf das Gewicht des eingesetzten Polyether-Blockpolymeren. Die Umsetzung wird solange durchgeführt, bis das Additionsprodukt die angestrebte Epoxidzahl von < 1 bis 2 hat. Das erhaltene Additionsprodukt kann durch Waschen mit Wasser vom eingesetzten Katalysator gereinigt werden. Die Reaktionszeit liegt im Bereich von 1 bis 10 Stunden. Die in Rede stehenden Additionsprodukte stellen gelb bis braun gefärbte, mehr oder weniger viskose Flüssigkeiten dar und haben die genannte Epoxidzahl.

Es hat sich herausgestellt, daß die erdölspaltende Wirkung der erfindungsgemäß ausgewählten Additionsprodukte noch gesteigert wird, wenn nach der beschriebenen Addition eine Propoxylierung angeschlossen wird, wenn also propoxylierte Additionsprodukte der beschriebenen Art eingesetzt werden. Erfindungsgemäß wird mit 5 bis 700 g Propylenoxid, vorzugsweise 30 bis 300 g Propylenoxid, pro 100 g Additionsprodukt, propoxiliert. Wenn auch die in Rede stehende Propoxylierung als solche aus den eingangs genannten Druckschriften bekannt ist, sei hier dennoch eine bevorzugte Vorgangsweise angegeben.
Die in Rede stehende Propoxylierung kann unter Verwendung eines inerten Lösungsmittels, mit Toluol oder Xylol, oder ohne Lösungsmittel in der Schmelze und unter Abdeckung mit einem Schutzgas durchgeführt werden, wobei die Durchführung in der Schmelze bevorzugt ist. Es wird ein alkalischer Katalysator in einer Menge von 0,05 bis 3 Gew.-% eingesetzt, vorzugsweise 0,1 bis 2 Gew.-%, Gewichtsprozente bezogen auf das Gewicht des zu propoxilierenden Additionsproduktes. Als alkalische Katalysatoren sind auch hier die obengenannten geeignet. Die in einem Reaktionsgefäß vorgelegte Mischung aus Additionsprodukt und Katalysator wird auf eine Temperatur von 80 bis 150 °C, vorzugsweise 100 bis 130 °C, erhitzt und mit der zu propoxilierenden Menge an Propylenoxid beaufschlagt, wobei die Anlagerungsreaktion abläuft. Der Druck während der Propoxilierung beträgt etwa 50 bis 600 kPa. Das Ende der Umsetzung ist am abgefallenen Druck erkennbar. Das propoxilierte Additionsprodukt stellt ebenso wie das unpropoxilierte eine gelb bis braun gefärbte, mehr oder weniger viskose Flüssigkeit mit einer Epoxidzahl von < 1 bis 2 dar.

Das erfindungsgemäße Verfahren weist eine Reihe von Vorteilen auf. So wird bei den übliche Erdöl-Aufbereitungstemperaturen schon nach kurzer Separationszeit eine vollständige Wasserabscheidung und

Reduzierung des Salzgehaltes erreicht. Mit dem neuen Verfahren werden also bei den üblichen Aufbereitungstemperaturen nach kurzer Separationszeit abnahmespezifische Roherdöle erhalten. Es wird ferner erreicht, daß das abgetrennte Wasser praktisch frei von Öl ist, daß also auch eine vollständige Ölabscheidung aus dem abgetrennten Wasser und damit eine gute Wasserqualität vorliegt. Bei dem neuen Verfahren stellt sich auch eine scharfe Trennung zwischen der Öl- und Wasserphase ein, was einen weiteren Vorteil darstellt. Die Wirksame Menge an erfindungsgemäß einzusetzendem Erdölspalter kann in weiten Grenzen variieren. Sie hängt insbesondere von der Art des Erdöls und der Aufbereitungstemperatur ab. Die wirksame Menge beträgt im allgemeinen 5 bis 100 g pro Tonne, vorzugsweise 10 bis 50 g pro Tonne. Zum Zwecke der besseren Dosierung und Verteilbarkeit wird der erfindungsgemäß einzusetzende Erdölspalter vorzugsweise in Lösung verwendet. Als Lösungsmittel sind Wasser oder organische Flüssigkeiten geeignet, beispielsweise Alkohole wie Methanol, Isopropanol oder Butanol, aromatische Kohlenwasserstoffe wie Toluol oder Xylol, und handelsübliche Mischungen aus höheren Aromaten.

Die Erfindung wird nun an Beispielen noch näher erläutert:

Beispiel 1

In einem Reaktionsgefäß, das mit Rührer, Rückflußkühler, Tropftrichter und Thermometer ausgestattet war, wurden vorgelegt 533,6 g von einem Ethylenoxid/Propylenoxid-Blockpolymeren der angegebenen Formel I mit m + n = 22 und p = 29 und mit 36,3 % Polyethylenoxidanteil, bezogen auf das Molekulargewicht des Gesamtmoleküls, das 2 668 ist, das sind 0,40 val von diesem Blockpolymeren mit einem Gehalt von 0,40 mol Hydroxy-Gruppen.

Das vorgelegte Blockpolymere wurde mit einer etwa 30gew.%igen wäßrigen Kaliumhydroxid-Lösung versetzt, so daß 0,3 Gew.-% Kaliumhydroxid als Katalysator vorlagen, Gewichtsprozente bezogen auf die Menge an Blockpolymeren. Der Inhalt des Reaktionsgefäßes wurde unter Rühren auf 80 °C erhitzt, worauf bei dieser Temperatur und ebenfalls unter Rühren 64,8 g, von einem Polyglycidylether der angegebenen Formel II mit einem Äquivalentgewicht von 180, das sind 0,36 val Polyglycidylether mit einem Gehalt von 0,36 mol Epoxid-Gruppen, in Form einer 80gew.%igen Lösung in Methylethylketon innerhalb einer Stunde zugetropft wurden.

Nach der Zugabe wurde die Mischung auf 100 bis 110 °C erhitzt und bei dieser Temperatur unter Rühren gehalten. Die Additionsreaktion zwischen dem Blockpolymeren und dem Polyepoxid wurde durch Bestimmung der Epoxidzahl verfolgt. Nach 6 Stunden war eine Epoxidzahl von 1,1 erreicht. Das erhaltene Additionsprodukt, eine leicht gelb gefärbte Flüssigkeit, hatte eine Viskosität von 3,6 Pa . s (bei 25 °C) und einen Trübungspunkt von 82 °C, gemessen nach DIN 53 971 unter Verwendung einer 50gew.%igen Lösung von Butyldiglykol in Wasser als Lösungsmittel.

Beispiel 2

Durchführung wie in Beispiel 1.

Eingesetzt wurden 4 804,0 g von einem Ethylenoxid/Propylenoxid-Blockpolymeren der angegebenen Formel I mit m + n = 119 und p = 60 und mit 60 % Polyethylenoxidanteil, bezogen auf das Molekulargewicht des Gesamtmoleküls, das 8 734 ist, das sind 1,10 val von diesem Blockpolymeren mit einem Gehalt von 1,10 mol Hydroxyl-Gruppen (zum Polyether-Blockpolymeren wurden wie in Beispiel 1 0,3 Gew.-% alkalischer Katalysator zugegeben) und 81,0 g von einem Polyglycidylether, der angegebenen Formel II mit einem Äquivalentgewicht von 180, das sind 0,45 val Polyglycidylether mit einem Gehalt von 0,45 mol Epoxid-Gruppen, in Form einer 80gew.%igen Lösung in Methylethylketon. Das erhaltene Additionsprodukt, ein leicht gelb gefärbter wachsartiger Feststoff, hatte die Epoxidzahl 1,3 und einen Trübungspunkt von 77 °C, gemessen nach DIN 53 791 unter Verwendung einer 25gew.%igen Lösung von Butyldiglykol in Wasser als Lösungsmittel.

Beispiel 3

Das Additionsprodukt von Beispiel 1 wurde propoxyliert. In einem Rührautoklaven wurden 200,0 g Additionsprodukt und 4,0 g einer 20 gew.%igen methanolischen Kaliummethylat-Lösung, das sind 0,4 Gew.-% Kaliummethylat, bezogen auf die 200,0 g, vorgelegt. Die Mischung wurde auf 80 °C erhitzt und bei dieser Temperatur im Wasserstrahlvakuum gehalten, bis sie von Methanol befreit und trocken war. Die trockene Mischung wurde auf 110 °C erhitzt, worauf bei 110 bis 120 °C 100 g Propylenoxid portionsweise zugegeben wurden (der Druck im Reaktionsgefäß betrug etwa 200 kPa). Nach Abreaktion des Propylenoxid lag das angestrebte propoxylierte Additionsprodukt vor, eine leicht gelb gefärbte Flüssigkeit mit einer

Viskosität von 4,2 Pa . s und einem Trübungspunkt von 67 °C, gemessen wie in Beispiel 1.

Beispiel 4

Das Additionsprodukt von Beispiel 2 wurde propoxyliert. In einem Rührautoklaven wurden 200,0 g Additionsprodukt und 2,0 g einer 40gew.%igen wäßrigen Natriumhydroxidlösung, das sind 0,4 Gew.-% Natriumhydroxid, bezogen auf die 200,0 g, vorgelegt. Die Mischung wurde wie in Beispiel 3 getrocknet und bei 110 bis 120 °C mit 500 g Propylenoxid umgesetzt. Nachdem alles Propylenoxid abreagiert war, lag das angestrebte propoxylierte Additionsprodukt vor, eine leicht gelb gefärbte Paste mit einem Trübungspunkt von 53 °C, gemessen wie in Beispiel 2.

Die produkte der Beispiele 1 bis 4 wurden in Erdölemulsionen getestet. Die Ergebnisse sind in den nachstehenden Tabellen I und II zusammengefaßt.

## Tabelle I

Ursprung der Rohölemulsion: Emsland, BRD

Wassergehalt der Rohölemulsion: 63,5 %

Salzgehalt der Rohölemulsion: 10,44 %

Demulgiertemperatur: 45 °C

Dosiermenge: 25 ppm

| Additionsprodukt aus Beispiel | Wasserseparation in Vol.-% nach Stunden 1 | 3 | 6 | 9 | 12 | 18 | 24 | Restsalzgehalt in ppm in der Ölphase |
|---|---|---|---|---|---|---|---|---|
| 1 | 63 | 72 | 80 | 89 | 97 | 99 | 100 | 265 |
| 2 | 54 | 66 | 78 | 91 | 96 | 98 | 99 | 345 |
| 3 | 30 | 42 | 56 | 86 | 99 | 100 | 100 | 125 |
| 4 | 27 | 48 | 77 | 88 | 98 | 99 | 100 | 188 |
| Blindwert | 0 | 0 | 0 | 0 | 0 | 0 | 0 | 54 628 |

T a b e l l e  I I

Ursprung der Rohölemulsion: Venezuela

Wassergehalt der Rohölemulsion: 36,2 %

Demulgiertemperatur: 80 °C

Dosiermenge: 38 ppm

| Additionsprodukt aus Beispiel | Wasserseparation in Vol.-% nach Minuten 10 | 20 | 30 | 40 | 50 | 60 | Restwasser in Gew.-% in der Ölphase |
|---|---|---|---|---|---|---|---|
| 1 | 63 | 73 | 81 | 90 | 98 | 100 | 0,28 |
| 2 | 59 | 60 | 71 | 84 | 93 | 100 | 0,18 |
| 3 | 48 | 70 | 88 | 100 | 100 | 100 | 0,11 |
| 4 | 89 | 95 | 97 | 99 | 100 | 100 | 0,12 |
| Blindwert | 0 | 0 | 0 | 0 | 0 | 0 | 10,76 |

## Patentansprüche

1. Verfahren zum Trennen von Erdölemulsionen vom Typ Wasser-in-Öl durch Zusatz von Glycidylether-Verbindungen, dadurch gekennzeichnet, daß den Erdölemulsionen Additionsprodukte aus 1 val endes

Ethylenoxid/Propylenoxid-Blockpolymeren der nachstehenden Formel I

$$HO(CH_2CH_2O)_m-(CH_2\underset{\displaystyle CH_3}{C}HO)_p-(CH_2CH_2O)_nH$$

worin m und n Zahlen sind, die so gewählt sind, daß der Polyethylenoxidanteil 10 bis 80% des Molekulargewichtes des Gesamtmoleküls beträgt, und p eine Zahl von 10 bis 100 ist, und 0,1 bis 1,5 val eines Polyglycidylethers der nachstehenden Formel II

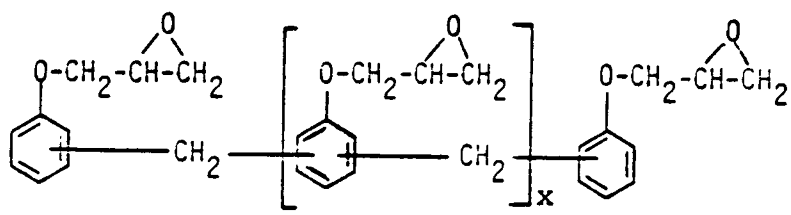

worin x eine Zahl von 1 bis 10 ist, in einer wirksamen Menge zugesetzt werden.

**2.** Verfahren nach Anspruch 1, dadurch gekennzeichnet, daß Additionsprodukte aus 1 val eines Ethylenoxid/Propylenoxid-Blockpolymeren der Formel I und 0,3 bis 1 val eines Polyglycidylethers der Formel II eingesetzt werden.

**3.** Verfahren nach Anspruch 1 oder 2, dadurch gekennzeichnet, daß ein Ethylenoxid/Propylenoxid-Blockpolymeres der Formel I eingesetzt wird, worin m und n Zahlen sind, die so gewählt sind, daß der Polyethylenoxidanteil 15 bis 70 % des Molekulargewichts des Gesamtmoleküls beträgt, und p eine Zahl von 20 bis 70 ist.

**4.** Verfahren nach einem oder mehreren der Ansprüche 1 bis 3, dadurch gekennzeichnet, daß ein Polyglycidylether der Formel II eingesetzt wird, worin x eine Zahl von 2 bis 5 ist.

**5.** Verfahren nach einem oder mehreren der Ansprüche 1 bis 4, dadurch gekennzeichnet, daß das Additionsprodukt mit 5 bis 700 g Propylenoxid pro 100 g Additionsprodukt propoxyliert worden ist.

**6.** Verfahren nach einem oder mehreren der Ansprüche 1 bis 5, dadurch gekennzeichnet, daß den Erdölemulsionen 5 bis 100 g Additionsprodukt beziehungsweise propoxyliertes Additionsprodukt pro 1 000 kg Erdölemulsion zugesetzt werden.

## Claims

**1.** A process for the separation of crude oil emulsions of the water-in-oil type by addition of glycidyl ether compounds, which comprises adding an effective quantity of addition products made from 1 eqivalent of an ethylene oxide/propylene oxide block polymer of the following formula I

$$HO(CH_2CH_2O)_m-(CH_2\underset{\displaystyle CH_3}{C}HO)_p-(CH_2CH_2O)_nH$$

in which m and n are numbers, which are selected in such a way that the proportion of polyethylene oxide is 10 to 80 % of the molecular weight of the total molecule, and p is a number from 10 to 100,

and 0.1 to 1.5 equivalent, of a polyglycidyl ether of the following formula II

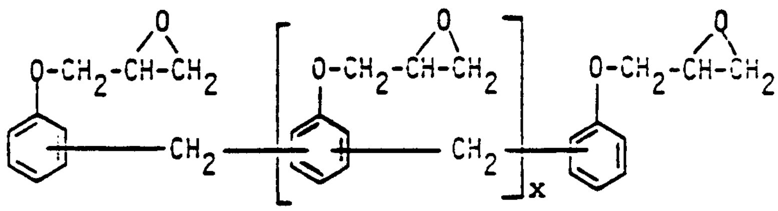

in which x is a number from 1 to 10,
to the crude oil emulsions.

2. The process as claimed in claim 1, wherein addition products made from 1 equivalent of an ethylene oxide/propylene oxide block polymer of the formula I and 0.3 to 1 equivalent of a polyglycidyl ether of the formula II are used.

3. The process as claimed in claim 1 or 2, wherein an ethylene oxide/propylene oxide block polymer of the formula I is used, in which m and n are numbers, which are selected so that the proportion of polyethylene oxide is 15 to 70 % of the molecular weight of the total molecule, and p is a number from 20 to 70.

4. The process as claimed in one or more of claims 1 to 3, wherein a polyglycidyl ether of the formula II is used, in which x is a number from 2 to 5.

5. The process as claimed in one or more of claims 1 to 4, wherein the addition product was propoxylated with 5 to 700 g propylene oxide per 100 g addition product.

6. The process as claimed in one or more of claims 1 to 5, wherein 5 to 100 g addition product or propoxylated addition product per 1,000 kg crude oil emulsion are added to the crude oil emulsion.

**Revendications**

1. Procédé pour séparer des émulsions de pétroles du genre eau-dans-huile par addition d'éthers glycidyliques, procédé caractérisé en ce que l'on ajoute à l'émulsion, dans une proportion appropriée, des produits d'addition de 1 val d'un copolymère séquencé d'oxyde d'éthylène et d'oxyde de propylène de formule I ci-dessous

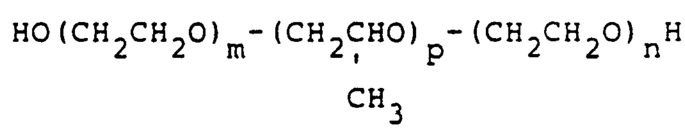

(dans laquelle m et n sont des nombres tels que l'oxyde de polyéthylène constitue de 10 à 80 % de la masse moléculaire de l'ensemble de la molécule, et p est un nombre de 10 à 100),
et de 0,1 à 1,5 val d'un éther polyglycidylique de formule II

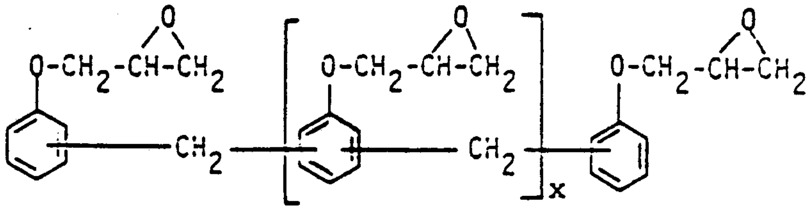

x étant un nombre de 1 à 10.

2. Procédé selon la revendication 1, caractérisé en ce que le produit ajouté est un produit d'addition de 1 val d'un copolymère séquencé d'oxyde éthylène et d'oxyde de propylène de formule I et de 0,3 à 1 val d'un éther polyglycidylique de formule II.

3. Procédé selon la revendication 1 ou 2, caractérisé en ce que dans le copolymère séquencé de formule I m et n sont des nombres tels que l'oxyde de polyéthylène constitue de 15 à 70 % de la masse moléculaire de l'ensemble de la molécule, et p est un nombre de 20 à 70.

4. Procédé selon une ou plusieurs des revendications 1 à 3, caractérisé en ce que l'on utilise un éther polyglycidyque de formule II dans lequel x est un nombre de 2 à 5.

5. Procédé selon une ou plusieurs des revendications 1 à 4, caractérisé en ce que le produit d'addition a été propoxylé avec de 5 à 700 g d'oxyde de propylène pour 100 g du produit.

6. Procédé selon une ou plusieurs des revendications 1 à 5, caractérisé en ce que l'on ajoute aux émulsions de pétroles, pour 1000 kg de l'émulsion, de 5 à 100 g du produit d'addition défini ou du produit d'addition propoxylé.